# EUROPÄISCHE PATENTSCHRIFT

(11) **EP 1 567 431 B1**
(45) Veröffentlichungstag und Bekanntmachung des Hinweises auf die Patenterteilung: **03.05.2006**
(21) Anmeldenummer: 03775314.2
(22) Anmeldetag: 04.11.2003
(51) Int. Cl.: B65G 15/58, B65G 21/20

(54) **FÖRDERSYSTEM FÜR FLACHE NICHT-MAGNETISCHE GEGENSTÄNDE**
TRANSPORT SYSTEM FOR NONMAGNETIC FLAT OBJECTS
SYSTEME DE TRANSPORT POUR DES OBJETS PLATS NON MAGNETIQUES

(30) Priorität: 13.11.2002 DE 10253097
(43) Veröffentlichungstag der Anmeldung: 31.08.2005
(73) Patentinhaber: Windmöller & Hölscher KG, 49525 Lengerich (DE)
(72) Erfinder: KNOKE, Thomas, 33619 Bielefeld (DE); DIECKMANN, Franz-Josef, 49497 Mettingen (DE); LAMKEMEYER, Andreas, 49082 Osnabrück (DE)
(86) Internationale Anmeldenummer: PCT/EP2003/012426
(87) Internationale Veröffentlichungsnummer: WO 2004/043834

(56) Entgegenhaltungen:
- DE-A- 4 302 827
- DE-A- 19 937 048
- US-A- 3 176 352
- US-A- 3 908 816

## Beschreibung

Die Erfindung betrifft ein Fördersystem zum Fördern von flachen, nicht magnetisierbaren Gegenständen, vorzugsweise von Schlauchabschnitten aus Folien oder Papier, wobei das Fördersystem mit mindestens einem umlaufenden Fördermittel, vorzugsweise einem Förderband und einem Haltemittel, welches eine Bewegung des Gegenstandes relativ zum umlaufenden Fördermittel vermeidet, ausgestattet ist.

Derartige Fördersysteme sind allgemein bekannt. Solche Förderer bestehen in der Regel aus zwei übereinander angeordneten, endlosen Förderbändern, die über Umlenkwalzen umgelenkt werden. Flache, nicht magnetische Gegenstände werden nun einem solchen Fördersystem dadurch transportiert, dass sie zwischen den aufeinander liegenden Trumen der beiden Förderer eingeklemmt werden. Um ein Verrutschen der Gegenstände relativ zu den Förderbändern zu vermeiden, muss eine ausreichende Haftreibung zwischen diesen Gegenständen und den Trumen bestehen. Zur Gewährleistung einer ausreichenden Haftreibung müssen die einander zugewandten Trume der Förderer noch zusätzlich zur Bahnspannung der Trumen zusammengedrückt werden. Bei den Fördersystemen bekannter Art geschieht dies mit Hilfe einer Vielzahl an Rollen, die auf den den Gegenständen oder Materialbahnen abgewandten Seiten der Trume laufen. Die Rollen sind derart federnd gelagert, dass die Rollen stets eine Kraft auf die Trume ausüben, so dass diese stärker gegeneinander gedrückt werden.

Ein Nachteil dieser Fördersysteme ist der mechanische Aufwand für die Rollen, die in einer beträchtlichen Anzahl in einem derartigen Fördersystem nötig sind.

Es sind jedoch auch Fördersysteme bekannt, bei denen das Förderband eines der Förderer mit Nadeln besetzt ist, die die flachen Gegenstände durchstoßen. Die flachen Gegenstände können sich nun nicht mehr relativ zum zugeordneten Trum des Förderbandes bewegen. Derartige Fördersysteme werden beispielsweise in so genannten Ventilbodenlegern, die der Herstellung von Ventilsäcken dienen, eingesetzt, in denen Schlauchstücke zwischen verschiedenen Bearbeitungsstationen transportiert und dort jeweils bearbeitet werden, wobei die Schlauchstücke auf dem Förderband verbleiben. Da die Bearbeitung der Schlauchabschnitte vorzugsweise auf einer der flachen Seite der Gegenstände erfolgt, kann kein herkömmlicher Förderer auf dieser Seite des Schlauchstückes angeordnet werden. Der Einsatz eines Nadelförderers als unterer Förderer ist unter diesen Umständen zwingend notwendig. Der obere Förderer entfällt in einer solchen Vorrichtung.

Ein Nachteil der Nadelförderer ist allerdings, dass die flachen Gegenstände oder Materialbahnen durch die Einstichlöcher der Nadeln beschädigt werden.

Daher schlagen die DE 43 02 827 A1 und die DE 199 37 048 A1 Transportvorrichtungen zum Transport von dünnen, flächigen Transportgütern vor, bei denen sich die Riemen aufgrund von magnetischen Kräften gegenseitig anziehen. Auf die Vielzahl der Rollen der eingangs beschriebenen Vorrichtungen kann aufgrund der magnetischen Anziehungskräfte verzichtet werden. Die beiden in den vorgenannten Druckschriften gezeigten Vorrichtungen können folgendermaßen beschrieben werden:
Ein Fördersystem zum Fördern von flachen nicht magnetisierbaren Gegenständen, vorzugsweise Schlauchabschnitten oder Materialbahnen aus Folien oder Papier,
- wobei das Fördersystem mit mindestens einem umlaufenden Fördermittel, vorzugsweise einem Förderband und
- einem Haltemittel, welches eine Bewegung des Gegenstandes relativ zum umlaufenden Fördermittel vermeidet, ausgestattet ist,
- wobei das Haltemittel zumindest zwei Komponenten aus Magneten oder magnetisch anziehbarem Material enthält, welche magnetische Kräfte aufeinander ausüben, und
- wobei die erste Komponente in oder an dem umlaufenden Fördermittel angeordnet ist,

Die in diesen beiden Druckschriften gezeigten Fördersysteme sind aufgrund ihrer Ausführung als Doppelbandförderer jedoch mechanisch aufwendig.

Die Druckschrift US 3176 352 zeigt ein Transportsystem für Fäden. Damit der transportierte Faden nicht aus seiner Transportlinie abweicht, wird dieser durch ein Transportband auf eine Gegenlage gedrückt. Der Antrieb des Fadens erfolgt dabei jedoch durch Rollenpaare, durch deren Spalte der Faden gefördert wird. Auch dieses System ist aufgrund der nunmehr vorzusehenden Rollenpaare mechanisch aufwendig.

Daher besteht die Aufgabe der vorliegenden Erfindung darin, ein Fördersystem vorzuschlagen, das einfacher aufbaubar ist

Hierzu geht die vorliegende Erfindung oberbegrifflich von den beiden vorgenannten Druckschriften aus und löst die Aufgabe dadurch,
- dass sich die Gegenlage relativ zum Fördermittel (16) langsamer bewegt oder in Ruhe befindet, und
- dass mit dem Fördermittel die zum Fördern der flachen, nicht magnetisierbaren Gegenstände (19) notwendige Kraft bereitstellbar ist.

Die Komponenten der Haltemittel werden dabei normalerweise so stark zusammengedrückt, dass die zu fördernden Gegenstände zwischen diesen Halfemitteln gehalten werden. Die magnetischen Kräfte werden durch das Zusammendrücken in mechanische Kräfte umgesetzt, wobei die auf den Gegenstand wirkenden Kräfte für ein Anpressen auf das Fördermittel sorgen, so dass sich der Gegenstand relativ zu dem Fördermittel In Ruhe befindet.

Wird die erfindungsgemäße Vorrichtung in einer Anlage zur Herstellung von Ventilsäcken verwendet, lässt sich sogar eine Beschädigung der zu fördernden und zu bearbeitenden Schlauchstücke vermeiden.

Um eine sichere Haftung des Gegenstandes auf dem Fördermittel zu unterstützen, weist in einer besonders bevorzugten Ausführungsform der Erfindung das mindestens eine Element auf seiner dem Fördermittel zugewandten Seite eine Oberfläche mit Reibungskoeffizienten auf, welcher niedriger ist als der Haftreibungskoeffizient des Fördermittels. Auf diese Weise wird der Gegenstand durch das Fördermittel mitgenommen, während er an dem Element entlang gleitet. Die Reibungskoeffizienten des Elements und des Fördermittels können sowohl durch eine geeignete Oberflächenbehandlung (Polieren, elektrische Aufladung) als auch durch Zugabe von geeigneten Stoffen (Schmiermittel, haftende oder klebende Mittel) beeinflusst werden.

Vorteilhafterweise besteht die Gegenlage aus einem Stahlbalken.

Um hohe magnetische Kräfte zu erreichen, ist ein umlaufendes Fördermittel vorgesehen, welches Permanentmagnete und/oder schalt- und/oder steuerbare Magnete aufweist. In einer solchen Anordnung sind die sich anziehenden Komponenten des Fördermittels und der Gegenlage räumlich sehr nahe, was eine starke magnetische Anziehung hervorruft. Die äußere Einflussnahme auf die Größe der magnetischen Kräfte durch Schalten und/oder Steuem bietet den Vorteil, dass sich die Kräfte an die Stärke der zu fördernden Gegenstände anpassen lassen.

In einer vorteilhaften Ausführungsform besteht das umlaufende Fördermittel aus einem Transportband, welches eine magnetische Beschichtung aufweist.

In einer weiteren Ausführungsform ist auf der der Gegenlage abgewandten Seite des Trums des Fördermittels mindestens ein magnetisches oder mit magnetischen Kräften anziehbares Element angeordnet.

Besonders vorteilhaft ist es dabei, einen im Maschinengestell gelagerten, balkenförmigen Magneten vorzusehen.

Eine weitere bevorzugte Ausführungsform der Erfindung weist eine Gegenlage mit mindestens einem weiteren Fördermittel auf. Ein weiteres Fördermittel kann notwendig werden, wenn sich der zu fördernde Gegenstand aufgrund einer zu starken Reibung zwischen dem Gegenstand und der Gegenlage relativ zum Fördermittel bewegt.

Vorteilhafterweise enthalten Bereiche dieses weiteren Fördermittels magnetische oder magnetisierbare Materialien.

In einer bevorzugten Ausführungsform ist das weitere Fördermittel ein mit einem magnetischen oder magnetisierbaren Material beschichtetes Transportband oder das weitere Fördermittel besteht aus einem solchen Material.

Besonders bevorzugt wird dabei ein weiteres Fördermittel, welches aus einem Stahlband besteht.

Vorteilhafte Ausgestaltungen der Erfindung sind den Figuren zu entnehmen. Die einzelnen Figuren zeigen:
- Fig. 1: Fördersystem nach dem Stand der Technik
- Fig. 2: Fördersystem mit zwei beschichteten Transportbändern
- Fig. 3: Darstellung gemäß Schnitt III - III in Fig. 2
- Fig.4: Fördersystem mit einem balkenartigen Magneten und einem beschichteten Transportband
- Fig. 5: Darstellung gemäß Schnitt V - V in Fig. 4
- Fig. 6: Fördersystem gemäß Fig. 2 mit modifizierten Förderbändern
- Fig. 7: Fördersystem mit einer festen Gegenlage
- Fig. 8: Darstellung gemäß Schnitt VIII- VIII in Fig. 7
- Fig. 9: Fördersystem mit einer festen Gegenlage und einem Führungsbalken

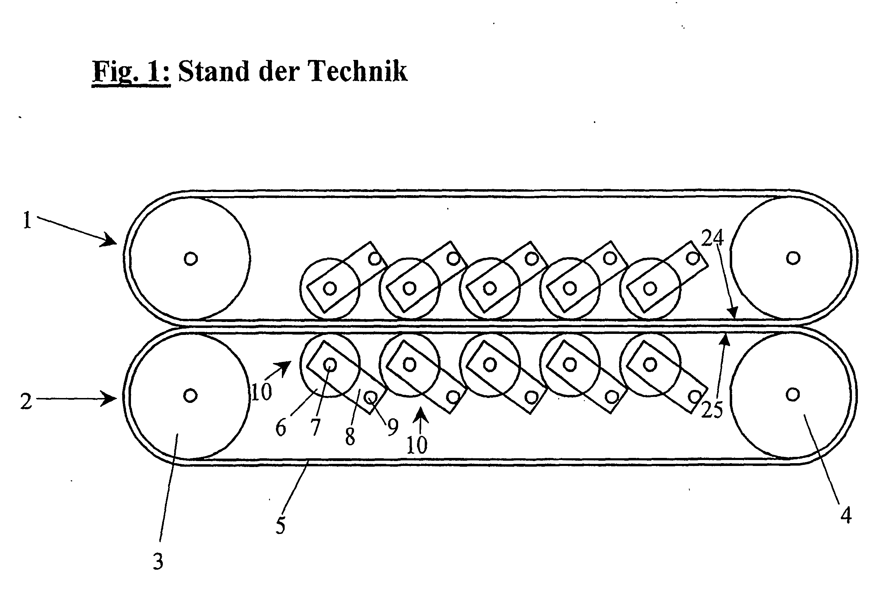

Fig. 1 zeigt ein Fördersystem gemäß des Standes der Technik. Das Fördersystem ist in einen oberen Förderer 1 und einen unteren Förderer 2 aufgeteilt, deren endlosen Förderbänder 5 durch Antriebsrollen 3 auf eine nicht näher dargestellte Weise angetrieben werden und über Umlenkrollen 4 geführt werden. Das untere Trum 24 des oberen Förderers 1 und das obere Trum 25 des unteren Förderers 2 sind einander zugewandt und werden durch Andruckelemente 10 zusammengedrückt. Die Andruckelemente 10 beinhalten Andruckrollen 6, auf denen die Trume der Förderer 1, 2 laufen. Die Andruckrollen 6 sind über Lager 7 in Federarmen 8 gelagert sind. Die Federarme 8 sind in nicht näher gezeigten Weise über Torsionsfedern 9 im nicht dargestellten Maschinenrahmen gelagert. Die Torsionsfedern 9 sind dabei vorgespannt, so dass die Andruckrolle 6 mit einer bestimmten Mindestkraft gegen das jeweils zugeordnete Trum 24, 25 drückt.

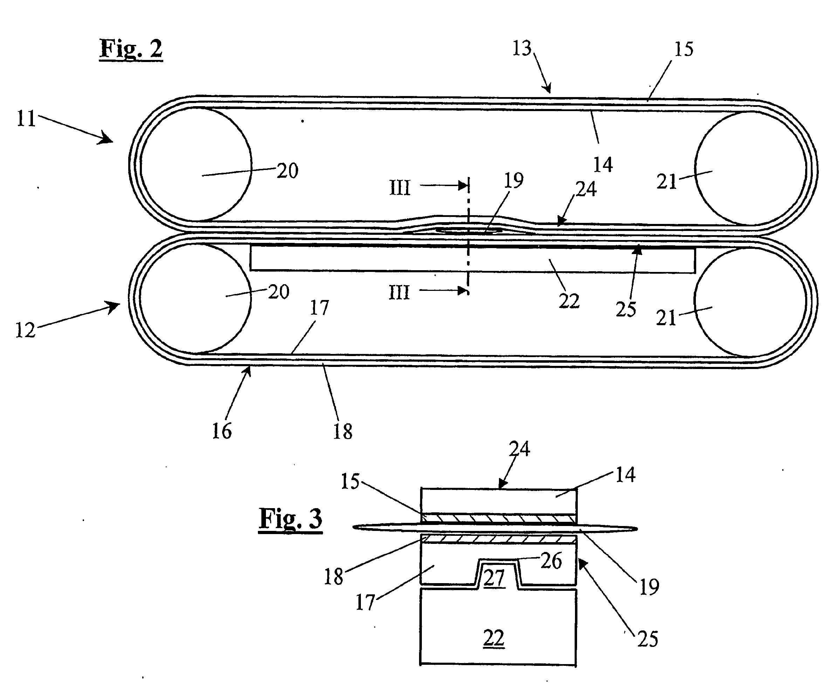

In der Figur 2 ist ein erfindungsgemäßes Fördersystem dargestellt, der aus einem oberen Förderer 11 und einem unteren Förderer 12 besteht. Das Förderband 13 des oberen Förderers 11 besteht aus einem Transportband 14, das mit einer magnetisierbaren Beschichtung 15 versehen ist. In ähnlicher Weise weist das Förderband 16 des unteren Förderers 12 ein Transportband 17 auf, das mit einer magnetischen Beschichtung belegt ist. Die Förderbänder 13, 16 werden durch die Antriebsrollen 20 angetrieben und laufen über Umlenkrollen 21. Das untere Trum 24 des oberen Förderers 11 wird aufgrund der von dem oberen Trum 25 des unteren Förderers 12 ausgehenden magnetischen Kraft in dessen Richtung gezogen. Diese anziehende Kraft kann mit klebendem Verhalten verglichen werden. Der Transport eines flachen Werkstücks 19 erfolgt nun dadurch, dass dieses zwischen den beiden Trumen 24 und 25 eingeklemmt wird, da die magnetische Anziehungskraft des oberen Trums 25 auf das untere Trum 24 auch durch ein flaches Werkstück 19 hindurch wirkt.

Wie aus Fig. 3 ersichtlich, ist das Transportband 17 auf seiner Innenseite mit einer Nut 26 ausgestattet, in die eine auf einem Führungsbalken 22 angeordnete Schiene 22 greift. Auf diese Weise werden unerwünschte Seitwärtsbewegungen des Förderbands 16 verhindert.

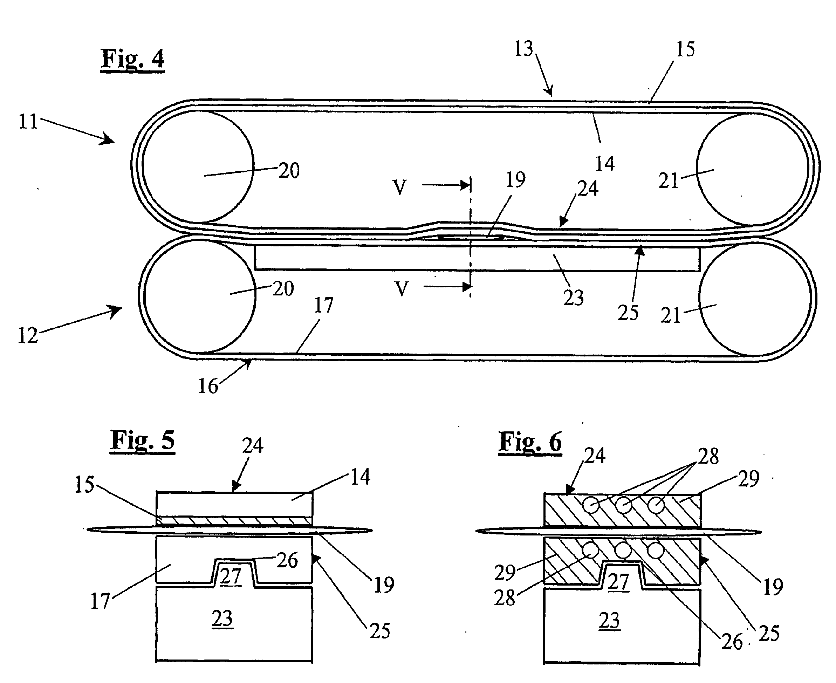

Ein weiteres Ausführungsbeispiel der Erfindung wird nun mit Hilfe der Figur 4 erläutert. Im Gegensatz zum in Figur 2 gezeigten Fördersystem weist das Förderband 16 des in Figur 2 gezeigten Förderers lediglich ein unbeschichtetes Transportband 17 auf. Das Förderband 13 besteht aus einem mit einer magnetisierbaren Beschichtung 15 versehenen Transportband 14. Unterhalb des oberen Trums 25 des unteren Förderers 12 ist ein balkenförmiger Magnet 23 angeordnet, der auf das untere Trum 24 des oberen Förderers 11 eine Anziehungskraft ausübt. Auf diese Weise wird dieses Trum 24 gegen das zugewandte Trum 25 des unteren Förderers gezogen. Befindet sich ein flaches Werkstück 19 zwischen den Trumen 24, 25, so wird dieses wiederum durch die auf das Trum 25 wirkenden Kräfte klemmend gehaltert.

Wie in Figur 5 gezeigt, kann auch der Magnet 23 eine Schiene 27 aufweisen, die in die in das Transportband 17 eingebrachte Nut 26 greifen, um ein seitliches Verrutschen des Transportbandes 17 zu verhindern.

Figur 6 zeigt den Querschnitt durch ein Fördersystem gemäß Figur 2 mit modifizierten Förderbändern 13, 16. Von den genannten Förderbändern 13, 16 sind analog zur Figur 3 die Trume 24, 25 zu sehen. Die Förderbänder 13, 16 bestehen aus magnetischem Material 29, das z. B. ferro- oder ferrimagnetisch sein kann. Um die Zugfestigkeit der Förderbänder 13, 16 zu erhöhen, kann das magnetische Material durch eingelegte Zugträger 28 verstärkt sein.

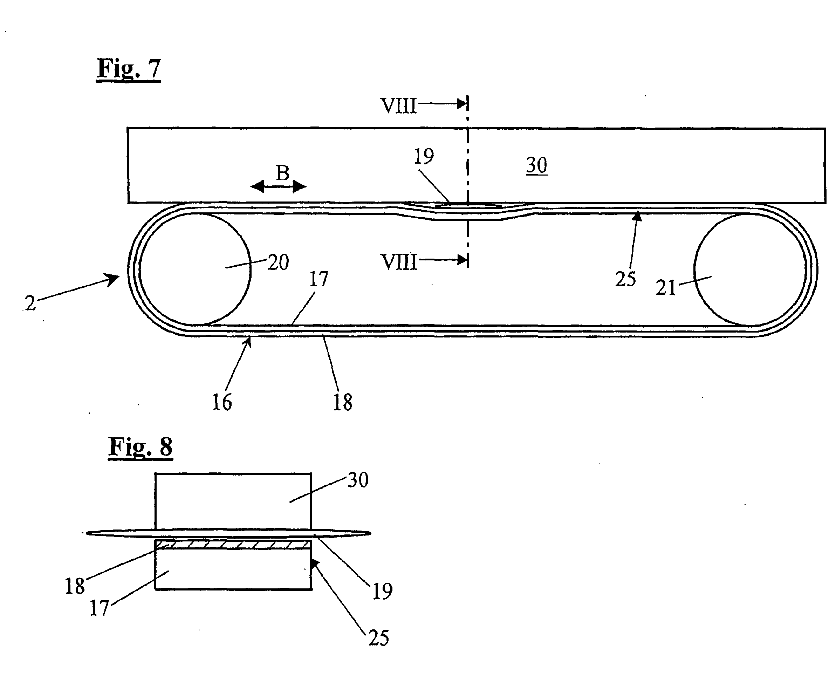

Figur 7 zeigt ein Fördersystem mit einer aus einem Gegendruckbalken 30 bestehender Gegenlage. Dieser Gegendruckbalken 20 ist auf nicht dargestellte Weise im Maschinengestell gelagert und befindet sich relativ zum Förderband 16 in Ruhe. Aufgrund der magnetischen Kräfte liegt das obere Trum 25 des Förderbandes 16 außer an der Stelle, an dem sich der zu fördernde Gegenstand 19 befindet, an dem Gegendruckbalken 30 an. Der zu fördernde Gegenstand wird zwischen dem Förderband 16 und dem Gegendruckbalken 30 gehalten. Bei Transport des Gegenstandes in eine der beiden möglichen Förderrichtungen B wird dieser durch die vom Förderband 16 vermittelten Haftreibung mitgezogen und gleitet gleichzeitig an dem Gegendruckbalken 30 entlang.

Fig. 8 zeigt die in Figur 7 gezeigte Situation im Querschnitt. Der Gegenstand 19 wird zwischen dem Gegendruckbalken 30 und dem oberen Trum 25 des Förderers gehalten. Das Förderband 16 besteht aus einem Transportband 17 und einer magnetischen Beschichtung 18.

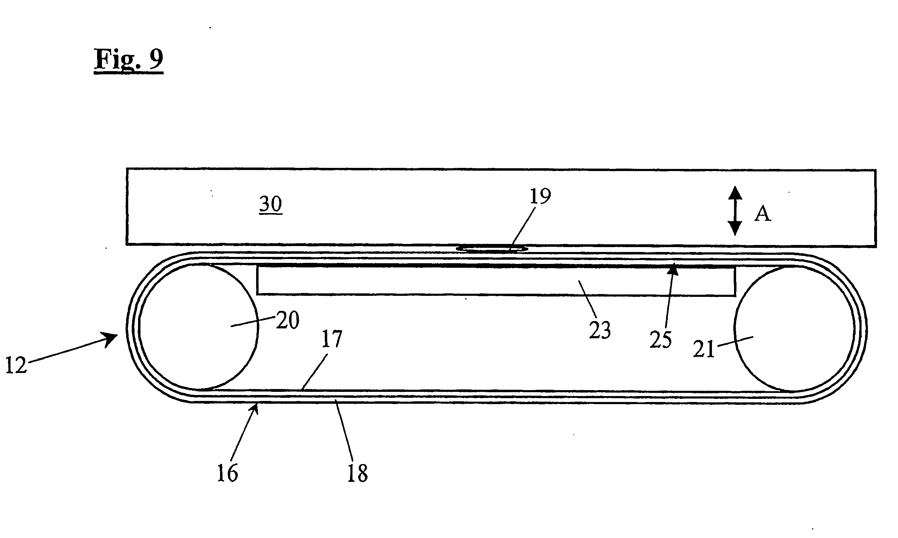

Fig. 9 zeigt ein Fördersystem, das dem in Figur 7 gezeigten Fördersystem ähnelt. Unterhalb des oberen Trums 25 des unteren Förderers 12 ist ein balkenförmiger Magnet 23 angebracht. Wenn sich kein zu fördernder Gegenstand 19 in dem Fördersystem befindet, liegt der Gegendruckbalken 30 auf dem oberen Trum 25 auf. Sobald sich ein Gegenstand 19 in dem Fördersystem befindet, kann sich der Gegendruckbalken 30 entlang des Doppelpfeils A bewegen, um für den Gegenstand 19 ausreichend Platz freizugeben.

| **Bezugszeichenliste** | |
|---|---|
| 1 | oberer Förderer |
| 2 | unterer Förderer |
| 3 | Antriebsrolle |
| 4 | Umlenkrolle |
| 5 | endloses Förderband |
| 6 | Andruckrolle |
| 7 | Lager für die Andruckrolle |
| 8 | Federarm |
| 9 | Torsionsfeder |
| 10 | Andruckelement |
| 11 | oberer Förderer |
| 12 | unterer Förderer |
| 13 | Förderband des oberen Förderers |
| 14 | Transportband |
| 15 | magnetisierbare Beschichtung |
| 16 | Förderband des unteren Förderers |
| 17 | Transportband |
| 18 | magnetische Beschichtung |
| 19 | flaches Werkstück |
| 20 | Antriebsrolle |
| 21 | Umlenkrolle |
| 22 | Führungsbalken |
| 23 | balkenförmiger Magnet |
| 24 | unteres Trum des oberen Förderers |
| 25 | oberes Trum des unteren Förderers |
| 26 | Nut |
| 27 | Schiene |
| 28 | Zugträger |
| 29 | magnetisches Material |
| 30 | Gegendruckbalken |
| A | Bewegungsrichtung des Gegendruckbalkens |
| B | Förderrichtungen |

## Patentansprüche

1. Fördersystem zum Fördern von flachen nicht magnetisierbaren Gegenständen (19), vorzugsweise Schlauchabschnitten oder Materialbahnen aus Folien oder Papier,
- wobei das Fördersystem mit mindestens einem umlaufenden Fördermittel (16), vorzugsweise einem Förderband und
- einem Haltemittel (13, 14), welches eine Bewegung des Gegenstandes (19) relativ zum umlaufenden Fördermittel (16) vermeldet, ausgestattet ist,
- wobei das Haltemittel (13, 14) zumindest zwei Komponenten (15, 18, 23, 30) aus Magneten oder magnetisch anziehbarem Material enthält, welche magnetische Kräfte aufeinander ausüben,
- wobei die erste Komponente (18, 23) in oder an dem umlaufenden Fördermittel und die zweite Komponente in oder an einer Gegenlage angeordnet ist, und
- wobei die erste und zweite Komponente In oder an dem zumindest einen Fördermittel (18) und der Gegenlage (30) derart angeordnet sind, dass die zwischen den Komponenten (15, 18, 23, 30) des Haltemittels auftretenden Kräfte den flachen Gegenständen zumindest teilweise vermittelbar sind
**dadurch gekennzeichnet,**
- **dass** sich die Gegenlage relativ zum Fördermittel (16) langsamer bewegt oder in Ruhe befindet, und
- **dass** mit dem Fördermittel (16) die zum Fördern der flachen, nicht magnetisierbaren Gegenstände (19) notwendige Kraft bereitstellbar ist.

2. Fördersystem nach Anspruch 1
**dadurch gekennzeichnet, dass**
die Gegenlage (30) auf der dem Fördermittel (16) zugewandten Seite eine Oberfläche mit Reibungskoeffizienten aufweist, welcher niedriger ist als der Haftreibungskoeffizient des Fördermittels (16).

3. Fördersystem nach einem der vorstehenden Ansprüche
**dadurch gekennzeichnet, dass**
die Gegenlage ein Balken aus Stahl ist.

4. Fördersystem nach einem der vorstehenden Ansprüche
**dadurch gekennzeichnet, dass**
das umlaufende Fördermittel (16) Permanentmagnete und/oder schalt- und/oder steuerbare Magnete aufweist.

5. Fördersystem nach einem der vorstehenden Ansprüche
**dadurch gekennzeichnet, dass**
das umlaufende Fördermittel (16) aus einem Transportband (17) besteht, welches Permanentmagnete In Form von magnetischen Beschichtungen (18) aufweist.

6. Fördersystem nach einem der vorstehenden Ansprüche
**dadurch gekennzeichnet, dass**
auf der der Gegenlage abgewandten Seite des die Gegenstände (19) transportierenden Trums (25) des Fördermittels (16) mindestens ein magnetisches oder mit magnetischen Kräften anziehbares Element (22, 23) angeordnet ist.

7. Fördersystem nach Anspruch 5
**dadurch gekennzeichnet, dass**
das mindestens eine Element (22, 23) ein im Maschinengestell gelagerter balkenförmiger Magnet ist.

8. Fördersystem nach einem der vorstehenden Ansprüche
**dadurch gekennzeichnet, dass**
die Gegenlage mindestens ein weiteres Fördermittel (13) umfasst.

9. Fördersystem nach Anspruch 7
**dadurch gekennzeichnet, dass**
Bereiche des weiteren Fördermittels (13) magnetisches oder magnetisierbares Material enthält.

10. Fördersystem nach Anspruch 7 oder 8
**dadurch gekennzeichnet, dass**
das weitere Fördermittel (13) ein mit einem magnetischen und/oder magnetisierbaren Material (15) beschichtetes Transportband (14) ist oder aus einem solchen Material besteht.

11. Fördersystem nach einem der Ansprüche 7 bis 9
**dadurch gekennzeichnet, dass**
das weitere Fördermittel (13) ein Stahlband ist.

12. Verfahren zum Fördern von flachen, nicht magnetisierbaren Gegenständen (19), vorzugsweise Schlauchabschnitten aus Follen oder Papier,
- wobei die Gegenstände auf mindestens einem umlaufenden Fördermittel (16), vorzugsweise einem Förderband, gefördert werden
- und durch ein Haltemittel, welches eine Bewegung des Gegenstandes (19) relativ zum Fördermittel vermeidet, gehalten werden,
- wobei zumindest zwei Komponenten des Haltemittels, welche Magneten oder magnetisch anziehbaren Material enthalten, magnetische Kräfte aufeinander ausüben
- wobei den flachen Gegenständen zumindest Teile der magnetischen Kräfte zwischen den Komponenten vermittelt werden, und
- wobei die erste Komponente (18, 23) in oder an dem umlaufenden Fördermittel und die zweite Komponente in oder an einer Gegenlage angeordnet ist,
**dadurch gekennzeichnet,**
- **dass** die Gegenlage relativ zum Fördermittel (16) langsamer bewegt oder in Ruhe gehalten wird, angeordnet ist,
- **dass** von dem Fördermittel (16) die zum Fördern der flachen, nicht magnetisierbaren Gegenstände (19) notwendige Kraft bereitgestellt wird.

## Claims

1. Conveying system for conveying flat non-magnetizable objects (19), preferably tubular portions or material webs made of films or paper,
- the conveying system being equipped with at least one circulating conveying means (16), preferably a conveyor belt, and
- with a holding means (13, 14) which prevents movement of the object (19) relative to the circulating conveying means (16),
- the holding means (13, 14) comprising at least two components (15, 18, 23, 30) made of magnets or magnetically attractable material, which exert magnetic forces on one another,
- the first component (18, 23) being arranged in or on the circulating conveying means and the second component being arranged in or on a counterlayer, and
- the first and second components in or on the at least one conveying means (16) and the counterlayer (30) being arranged in such a way that the forces arising between the components (15, 18, 23, 30) of the holding means can be conveyed at least partly to the flat objects,
**characterized in that**
- the counterlayer moves slower or is at rest relative to the conveying means (16), and
- the force necessary for conveying the flat, non-magnetizable objects (19) can be provided by the conveying means (16).

2. Conveying system according to Claim 1, **characterized in that** the counterlayer (30) comprises on the side facing the conveying means (16) a surface with a coefficient of friction which is lower than the coefficient of static friction of the conveying means (16).

3. Conveying system according to one of the preceding claims, **characterized in that** the counterlayer is a beam made of steel.

4. Conveying system according to one of the preceding claims, **characterized in that** the circulating conveying means (16) comprises permanent magnets and/or switchable and/or controllable magnets.

5. Conveying system according to one of the preceding claims, **characterized in that** the circulating conveying means (16) consists of a transport belt (17) which comprises permanent magnets in the form of magnetic coatings (18).

6. Conveying system according to one of the preceding claims, **characterized in that** at least one element (22, 23) which is magnetic or attractable with magnetic forces is arranged on that side facing away from the counterlayer of that strand (25) of the conveying means (16) transporting the objects (19).

7. Conveying system according to Claim 5, **characterized in that** the at least one element (22, 23) is a beam-shaped magnet mounted in the machine frame.

8. Conveying system according to one of the preceding claims, **characterized in that** the counterlayer comprises at least one further conveying means (13).

9. Conveying system according to Claim 7, **characterized in that** regions of the further conveying means (13) comprise magnetic or magnetizable material.

10. Conveying system according to Claim 7 or 8, **characterized in that** the further conveying means (13) is a transport belt (14) coated with a magnetic and/or magnetizable material (15) or is made of such a material.

11. Conveying system according to one of Claims 7 to 9, **characterized in that** the further conveying means (13) is a steel band.

12. Method for conveying flat, non-magnetizable objects (19), preferably tubular portions made of films or paper,
- the objects being conveyed on at least one circulating conveying means (16), preferably a conveyor belt,
- and being held by a holding means which prevents movement of the object (19) relative to the conveying means,
- at least two components of the holding means, which comprise magnets or magnetically attractable material, exerting magnetic forces on one another,
- at least parts of the magnetic forces between the components being conveyed to the flat objects, and
- the first component (18, 23) being arranged in or on the circulating conveying means and the second component being arranged in or on a counterlayer,
**characterized in that**
- the counterlayer is moved slower or is held at rest relative to the conveying means (16), and
- the force necessary for conveying the flat, non-magnetizable objects (19) is provided by the conveying means (16).

## Revendications

1. Système de transport pour le transport d'objets plats non magnétisables (19), de préférence des segments de tuyaux souples ou des bandes de matière constituées de feuilles ou de papier,
dans lequel le système de transport est équipé d'au moins un moyen de transport circulaire (16), de préférence une bande transporteuse et
d'un moyen de retenue (13, 14) qui empêche un déplacement de l'objet (19) par rapport au moyen de transport circulaire (16),
dans lequel le moyen de retenue (13, 14) comprend au moins deux composants (15, 18, 23, 30) constitués d'aimants ou d'un matériau magnétisable qui exercent des forces magnétiques l'un sur l'autre,
dans lequel le premier composant (18, 23) est disposé dans ou sur le moyen de transport circulaire et le second composant est disposé dans ou sur une contre-couche, et
dans lequel le premier et le second composant sont disposés dans ou sur le au moins un moyen de transport (16) et dans ou sur la contre-couche (30) de telle manière que les forces générées entre les composants (15, 18, 23, 30) du moyen de retenue peuvent être transmises au moins partiellement aux objets plats,
**caractérisé en ce que**
la contre-couche se déplace plus lentement par rapport au moyen de transport (16) ou se trouve au repos, et
la force nécessaire pour le transport des objets plats non magnétisables (19) peut être fournie par le moyen de transport (16).

2. Système de transport selon la revendication 1,
**caractérisé en ce que**
la contre-couche (30) sur le côté tourné vers le moyen de transport (16) présente une surface ayant un coefficient de frottement qui est inférieur au coefficient de frottement du moyen de transport (16).

3. Système de transport selon l'une quelconque des revendications précédentes,
**caractérisé en ce que**
la contre-couche est une poutre en acier.

4. Système de transport selon l'une quelconque des revendications précédentes,
**caractérisé en ce que**
le moyen de transport circulaire (16) comporte des aimants permanents et/ou des aimants qui peuvent être commutés et/ou commandés.

5. Système de transport selon l'une quelconque des revendications précédentes,
**caractérisé en ce que**
le moyen de transport circulaire (16) est constitué d'une bande transporteuse (17) qui comporte des aimants permanents sous forme de revêtements magnétiques (18).

6. Système de transport selon l'une quelconque des revendications précédentes,
**caractérisé en ce**
**qu'**un élément (22, 23) magnétique ou pouvant être attiré par des forces magnétiques est disposé sur le côté opposé à la contre-couche du brin (25) du moyen de transport (16) transportant les objets (19).

7. Système de transport selon la revendication 5,
**caractérisé en ce que**
au moins un élément (22, 23) est un aimant en forme de poutre logé dans le bâti de machine.

8. Système de transport selon l'une quelconque des revendications précédentes,
**caractérisé en ce que**
la contre-couche comprend au moins un autre moyen de transport (13).

9. Système de transport selon la revendication 7,
**caractérisé en ce que**
des zones de l'autre moyen de transport (13) comprennent un matériau magnétique ou magnétisable.

10. Système de transport selon la revendication 7 ou 8,
**caractérisé en ce que**
l'autre moyen de transport (13) est une bande de transport (14) revêtue d'un matériau magnétique et/ou magnétisable ou est constitué d'un tel matériau.

11. Système de transport selon l'une quelconque des revendications 7 à 9,
**caractérisé en ce que**
l'autre moyen de transport (13) est une bande en acier.

12. Procédé pour le transport d'objets plats non magnétisables (19), de préférence des segments de tuyaux souples constituées de feuilles ou de papier,
dans lequel les objets sont transportés sur au moins un moyen de transport circulaire (16), de préférence une bande transporteuse et
sont retenus par un moyen de retenue qui empêche un déplacement de l'objet (19) par rapport au moyen de transport,
dans lequel au moins deux composants du moyen de retenue, qui comportent des aimants ou un matériau magnétisable, exercent des forces magnétiques l'un sur l'autre,
dans lequel au moins des portions des forces magnétiques entre les composants sont transmises aux objets plats, et
dans lequel le premier composant (18, 23) est disposé dans ou sur le moyen de transport circulaire et le second composant est disposé dans ou sur une contre-couche,
**caractérisé en ce que**
la contre-couche se déplace plus lentement par rapport au moyen de transport (16) ou se trouve au repos,
la force nécessaire pour le transport dés objets plats non magnétisables (19) est fournie par le moyen de transport (16).
